# EUROPÄISCHE PATENTSCHRIFT

(11) **EP 3 909 736 B1**
(45) Veröffentlichungstag und Bekanntmachung des Hinweises auf die Patenterteilung: **15.01.2025**
(21) Anmeldenummer: 21184217.4
(22) Anmeldetag: 07.09.2017
(51) Int. Cl.: B29B 17/02, B29K 23/00, B29L 31/00, B29B 17/04, B29K 105/00

(54) **VERFAHREN ZUR HERSTELLUNG VON POLYOLEFIN-REZYKLATEN**
METHOD FOR PRODUCING POLYOLEFIN RECYCLATES
PROCÉDÉ DE PRODUCTION DE RECYCLATS DE POLYOLÉFINES

(30) Priorität: 07.09.2016 DE 102016116742
(43) Veröffentlichungstag der Anmeldung: 17.11.2021
(62) Teilanmeldung aus: 17768053.5
(73) Patentinhaber: Der Grüne Punkt - Duales System Deutschland GmbH, 51149 Köln (DE)
(72) Erfinder: HEYDE, Michael, 51427 Bergisch Gladbach (DE); SCHWARZ-HILGENFELD, Ines, 51061 Köln (DE); WIETHOFF, Stefan, 50189 Elsdorf (DE); RAMSEL, Anna, 50825 Köln (DE); RABANIZADA, Nabila, 50969 Köln (DE); BORCHERS, Bryan-Cody, 52525 Heinsberg (DE)
(74) Vertreter: Meissner Bolte Partnerschaft mbB

(56) Entgegenhaltungen:
- EP-A2- 2 823 945
- WO-A1-2012/117250
- WO-A1-2012/139967
- CN-A- 104 959 343
- DE-A1- 19 753 386
- US-A1- 2013 186 573
- WRAP ED - WRAP: "Scoping study into food gradepolypropylene recycling", INTERNET CITATION, 30 November 2010 (2010-11-30), pages 1 - 79, XP002678334, Retrieved from the Internet <URL:http://www.wrap.org.uk/sites/files/wrap/Scoping%20study%20into%20food%20grade%20polypropylene%20recycling%20-%20Report.pdf> [retrieved on 20120621]
- FRANK WELLE: "Develop a food grade HDPE recycling process", 4 June 2005 (2005-06-04), XP055585397, ISBN: 978-1-84405-225-7, Retrieved from the Internet <URL:http://www.wrap.org.uk/sites/files/wrap/Full%20wrap_HDPE_Recycling_final_reportV141205.pdf> [retrieved on 20190503]
- WRAP: "Food grade decontamination trials of household PP waste", WRAP PROJECT IMT003-101, 1 July 2012 (2012-07-01), XP055621993, Retrieved from the Internet <URL:http://www.wrap.org.uk/sites/files/wrap/Phase%203%20Food%20Grade%20rPP%20decontamination%20final%20report.pdf> [retrieved on 20190913]
- "Recycling von Kunststoffen", 31 December 1992, ISBN: 978-3-446-16437-6, article MENGES: "Recycling von Kunststoffen", pages: 1 - 7, XP093080322

## Beschreibung

Die vorliegende Erfindung betrifft ein verbessertes Verfahren zur Herstellung von Polyolefin-Rezyklaten und insbesondere von HDPE- und PP-Rezyklaten.

### Hintergrund der Erfindung

Polyolefine sind robuste, flexible Kunststoffe, die auf Grund ihrer leichten Verarbeitbarkeit und chemischen Beständigkeit zahlreiche Einsatzmöglichkeiten aufweisen und stellen mit einem Anteil von etwa 45 % die größte Einzelgruppe an Verbrauchskunststoffen in Europa dar.

Der mit Abstand größte Einsatzbereich für polyolefinische Kunststoffe sind Verpackungen. Die Omnipräsenz von Kunststoffverpackungen lassen diese immer wieder in den Focus umweltpolitischer Debatten geraten. Steht keine geeignete Infrastruktur zur Einsammlung, Sortierung und Verwertung zur Verfügung, können Kunststoffverpackungen zum Problem werden, wie die Debatte über die Verschmutzung der Meere deutlich macht. Die EU-Verpackungsrichtlinie sowie die entsprechenden nationalen Gesetzgebungen haben in den vergangenen 25 Jahren in unterschiedlichem Umfang und Ausmaß europaweit den Aufbau solcher Infrastrukturen initiiert. In Deutschland handelt es sich um die Erfassungssysteme vom Typ Gelber Sack/ Gelbe Tonne und die damit verknüpften Konzepte und Anlagen zur Sortierung und Verwertung. Die langfristige Tragfähigkeit dieser Infrastrukturen und deren Ausweitung auf andere Länder hängt ganz wesentlich von der Nachfrage der Industrie nach recycelten Kunststoffen ab, die sich umso besser entwickeln wird, je höher die Qualität der angebotenen Recyclate ausfällt.

Bei den Verpackungen aus PET gelingt das heute schon im sogenannten closed loop, wobei aus Verpackungskunststoffen im nächsten Nutzungszyklus wieder Verpackungen hergestellt werden. Bei Polyolefinen stellt sich das Problem, dass Polyolefine aus Standard-Recycling-Verfahren in gemischten Farben verarbeitet werden, die sich auch im recyclisierten Material wiederfinden. Die so hergestellten Endprodukte weisen daher, abhängig von der Zusammensetzung des Ausgangsmaterials, unterschiedliche Grautöne auf. Da die bisher verfügbaren Recyclingverfahren auch Rest-Verunreinigungen auf den polyolefinischen Kunststoffen belassen, kommt es in den aufbereiteten Produkten zur Entwicklung von Rezyklat-typischen Gerüchen, die Endverbraucher-nahe Anwendungen ausschließen. Dies führt dazu, dass man es bei Polyolefinischen Kunststoffen heute überwiegend mit Endverbraucher-ferneren "Open-loop"-Anwendungen zu tun hat, d.h. die Rezyklate werden nicht wieder zu Verpackungen, sondern zu langlebigen Kunststoffprodukten z.B. aus dem Baubereich verarbeitet.

Für eine Wiederverwendung von Polyolefin-Kunststoffen sind insbesondere Fremdsubstanzen problematisch, die während des Primärgebrauchs der Polyolefine in kleinen Mengen aufgenommen werden. So kann z.B. eine Polyethylenverpackung eines Shampoos unpolare Inhaltsstoffe wie Parfüme aus dem Shampoo aufnehmen, die sich durch ein einfaches Waschen mit Wasser nicht mehr entfernen lassen. Wird ein solches Polyolefin-Rezyklat hohen thermischen Belastungen ausgesetzt, was beispielsweise bei Extrusionsprozessen der Fall ist, so zersetzen sich diese Migrationsstoffe, was eine wesentliche Quelle der rezyklat-typischen Geruchsbeeinträchtigungen ausmacht.

Darüber hinaus problematisch ist insbesondere bei Polyolefinverpackungsmaterialien, dass diese im Gegensatz beispielsweise zu PET-Getränkeverpackungen, nicht als farblich verhältnismäßig einheitliches Ausgangsmaterial anfallen. Dies führt unter Verwendung der bis heute üblichen Sortierverfahren zu Produkten mit unterschiedlichen Grautönen, wie vorstehend erwähnt.

Eine Ausnahme bilden spezielle Sammelsysteme für einheitliche Verpackungen, z.B. in Form von Milchflaschen, die, wie andere Getränkeverpackungen, z.B. in Großbritannien in Supermärkten gesondert eingesammelt werden. Der überwiegende Anteil der Polyolefinverpackungen, die oft nicht nur verschiedenfarbige Polyolefinverpackungen sondern auch einen signifikanten Anteil an anderen Kunstoffen und Fremdsubstanzen wie Metalle, Holz oder Papier enthalten, wird jedoch lediglich nach Materialart (z.B. "PE") sortiert und, wie oben erläutert, meist nach Zerkleinerung und Wäsche mit kaltem Wasser granuliert und auf einem Erlösniveau in endverbraucherfernen Anwendungen zum Einsatz gebracht, das meist deutlich unterhalb der Preise für Neuware liegt. Ein Verfahren des Standes der Technik zum Herstellen von Polyolefinrezyklat ist beispielsweise aus der WO2012/117250A1 bekannt.

Der langfristige Trend steigender Rohstoffpreise sowie der in der Konsumgüter-Industrie wahrgenommene Druck, sich auf eine steigende Nachfrage nach nachhaltig hergestellten Produkten einzustellen, hat einen Bedarf nach Verfahren ausgelöst, mit denen polyolefinische Verpackungsabfälle insbesondere aus privaten Hauhalten für den Wiedereinsatz in Verpackungen für Endverbraucher aufbereitet werden können. Dafür sollte das Verfahren ein möglichst reines Rezyklatprodukt liefern, das einer erneuten Extrusion zugeführt werden kann, ohne dass dabei mit einem unangenehmen Geruch behaftete Nebenprodukte generiert werden. Darüber hinaus sollte das Verfahren möglich unkompliziert auch mit großen Durchsatzmengen und kostengünstig durchgeführt werden können, um ein am Markt wettbewerbsfähiges Produkt zu erhalten. Die vorliegende Erfindung befasst sich mit diesem Bedarf.

### Zusammenfassung der Erfindung

Im Allgemeinen offenbart die vorliegende Erfindung Verfahren zur Herstellung von Polyolefinrezyklaten aus gemischtfarbigen Polyolefin haltigen Reststoffen. Insbesondere kann das offenbarte Verfahren Polyolefine von kontaminierenden Bestandteilen trennen, die in Folge von Migrationsprozessen in die Polyolefine eingelagert wurden, das Verfahren kann aber auch kontaminierende Bestandteile abtrennen die auf der Oberfläche der Polyolefine haften oder die im Gemisch mit den Polyolefinen vorliegen.

Im Speziellen betrifft die vorliegende Erfindung ein Verfahren zur Herstellung eines für die Herstellung von Consumer-Produkten geeigneten Polyolefin nach Anspruch 1.

Wenn im Vorstehenden angegeben ist, dass die Schritte (ii) und (iii) auch in umgekehrter Reihenfolge durchgeführt werden können, so ist dies so zu verstehen, dass in diesem Fall der Wasserbehandlung (i), bei der keine thermische Energie zugeführt wird, eine Flakesortierung der aus der Wasserbehandlung erhaltenen Polyolefin-Reststofffraktion unter Erhalt einer oder mehrerer farbreiner Polyolefin-Reststofffraktionen nachgeschaltet ist, auf die eine Behandlung der Reststofffraktion im Rahmen einer Wäsche mit einem alkalischen Medium bei einer Temperatur von mindestens 60°C folgt. Die in (iv) beschriebene Behandlung ist dieser Wäsche dann nachgeschaltet.

Bei den in das erfindungsgemäße Verfahren als Ausgangsmaterial einzubeziehenden Polyolefin-Reststofffraktionen kann es sich um Reststofffraktionen aus jedem in Frage kommenden Polyolefin bzw. aus Mischungen von Polyolefinen handeln. Es ist jedoch bevorzugt, wenn es sich bei der Polyolefin-Reststofffraktion um ein Material handelt, das zu einem überwiegenden Anteil, d.h. zu mindesten 75 Gew.-% bevorzugt mindesten 80 Gew.- und besonders bevorzugt mindestens 90 Gew.-%, aus Polyolefinen desselben Basispolymer besteht. Als Basispolymer gelten unter anderem Homopolymere wie Polypropylen oder Polyethylen, aber auch Copolymere von Ethylen oder Propylen mit anderen o-Olefin Monomeren. Bei Polyethylen sollen auch die bekannten verschiedenen Modifikationen wie HDPE, LDPE oder LLDPE jeweils als eigenständige Basispolymere angesehen werden. Im Rahmen der vorliegenden Erfindung besonders bevorzugte Polyolefine sind Polypropylen und Modifikationen von Polyethylen, insbesondere in Form von LDPE und HDPE, bevorzugt in Form von HDPE.

Als Rohstoff können für das Verfahren zweckmäßig nach Hauptkunststoffbestandteilen vorsortierte Reststofffraktionen genutzt werden, die von konventionellen Abfallsortieranlagen bezogen werden können. Solche vorsortierten Reststofffraktionen sind beispielsweise in Form von gepressten Ballen als Handelsware erhältlich, und bestehen zu einem überwiegenden Anteil (etwa 90 bis 95 %, bezogen auf den Kunststoffanteil) aus einem oder mehreren definierten Kunststoffbasispolymeren (z.B. PP, HDPE oder LDPE).

Im Rahmen des erfindungsgemäßen Verfahrens ist es auch möglich, gesondert eingesammelte Reststoffe, wie z.B. Milchflaschen, zu verwenden. Da solche gesondert eingesammelten Reststoffe aber in der Regel wesentlich einheitlichere Verschmutzungen aufweisen, kann das erfindungsgemäße Verfahren seine Vorteile bei der Aufbereitung solcher Reststoffe nicht in vollem Umfang ausspielen. Die in das erfindungsgemäße Verfahren einzubeziehende Reststofffraktion enthält mindestens Polyolefine verschiedener Farben. Als Farbig sollen im Rahmen der vorliegenden Erfindung auch transparente, weiße und schwarze Polyolefin-Artikel angesehen werden.

Besonders bevorzugt ist es, wenn der Anteil der Reststofffraktion, der die Hauptfarbe der Reststofffraktion ausmacht, nicht mehr als 40 Gew.-% beträgt. Darüber hinaus ist es erfindungsgemäß vorgesehen, dass die in das erfindungsgemäße Verfahren einzubeziehende Reststofffraktion transparente, weiße und restfarbige Polyolefin-Artikel mit einem Anteil von etwa 20 bis 45 Gew.-% transparente Artikel, etwa 20 bis 45 Gew.-% weiße Artikel und etwa 20 bis 45 Gew.-% restfarbige Artikel enthält. Weiterhin ist es erfingungsgemäß vorgesehen, dass die Reststofffraktion Verpackungen aus unterschiedlichen Anwendungen (z.B. Shampoo- und Lebensmittelverpackungen) umfasst, da solche Reststofffraktionen mit einer größeren Bandbreite an Verschmutzungen verunreinigt sind, so dass die Vorteile des erfindungsgemäßen Verfahrens voll zu Geltung kommen.

Im ersten Schritt (i), der auch als Kaltwäsche bezeichnet werden kann, wird die Polyolefin-Reststofffraktion mit Wasser gewaschen, um oberflächliche Verunreinigungen, z.B. in Form von Lebensmittelresten, Salzen oder Papieretiketten, von den Polyolefinen zu entfernen. Hierzu ist es regelmäßig nicht erforderlich das Wasser vor dem Waschvorgang zu erhitzen oder mit Zusätzen zu modifizieren. Die Temperatur, bei der diese Wäsche durchgeführt wird, hängt, da keine thermische Energie zugeführt wird, vom mechanischen Energieeintrag und der Außentemperatur ab, und liegt häufig bei 30°C oder weniger. Abhängig vom Verschmutzungsgrad und den vorliegenden verschmutzenden Bestandteilen kann die Kaltwäsche in Einzelfällen aber auch durch eine mechanische Trockenwäsche ersetzt werden, z.B. indem abrasive Bestandteile zugegeben werden und die Mischung anschließend intensiv bewegt wird. Durch Stöße mit den Polyolefinbestandteilen können so Verunreinigungen von deren Oberfläche abgelöst werden. Die abrasiven Bestandteile können anschließend wieder von den Polyolefinen getrennt werden, beispielsweise mit Hilfe eines Schwimm/Sink-Verfahrens, bei dem die Polyolefine auf Grund ihrer Dichte auf dem Wasser aufschwimmen, während die abrasiven Bestandteile absinken.

Für das Waschen im Rahmen von Schritt (i) ist es erfindungsgemäß vorgesehen, dass das Ausgangsmaterial vor der Kaltwäsche einem oder mehreren Schritten des Zerkleinerns unterzogen wird. Dies ist insbesondere dann sinnvoll, wenn das Ausgangsmaterial Verpackungen mit Hohlräumen enthält, da sich in diesem Fall durch das Zerkleinern sicherstellen lässt, dass das Waschwasser mit der gesamten Oberfläche der Verpackungen in Kontakt treten kann. Das Zerkleinern kann zweckmäßig in einem Shredder, einer Schneidmühle oder ähnlichen Zerkleinerungsvorrichtungen durchgeführt werden. Das Zerkleinern kann sowohl nass (d.h. unter Zusatz von Wasser oder Feuchtigkeit) als auch trocken erfolgen. Darüber hinaus, kann das Zerkleinern auch in einem zwei- oder mehrstufigen Prozess, insbesondere einem zweistufigen Prozess erfolgen, wobei bevorzugt die erste Stufe als Trockenprozess und die zweite Stufe als Nassprozess ausgelegt ist. Die durch das Zerkleinern einzustellende mittlere Partikelgröße sollte maximal etwa 20 mm, insbesondere maximal 15 mm, bevorzugt aber mindestens 2 mm und insbesondere mindestens 4 mm betragen. Eine besonders günstige Partikelgröße liegt im Bereich von etwa 5 bis 10 mm. Mit Partikelgröße ist hierbei die größte räumliche Ausdehnung der jeweiligen Partikel gemeint.

Die Größenverteilung der Partikel kann variieren. Idealerweise sollten aber mindestens 80% (± 10%) der Partikel eine Partikelgröße innerhalb des angegebenen Bereichs aufweisen.

Darüber hinaus kann es sinnvoll sein, das Ausgangsmaterial vor der Behandlung im Schritt (i) einem Schritt des physikalischen Entfernens von losen kontaminierenden Bestandteilen zu unterziehen. Beispielsweise können lose Metall- oder Glasbestandteile aus dem Ausgangsmaterial entfernt werden, indem magnetische Metallbestandteile mit Hilfe von Magneten aus dem Ausgangsmaterial herausgezogen werden, oder indem das größere spezifische Gewicht der Verunreinigung ausgenutzt wird. Da Polyolefine leichter sind als Glas oder Metalle kann das Ausgangsmaterial z.B. mit Hilfe eines Förderbandes über einen Spalt gefördert werden, der so bemessen ist, dass die Verunreinigungen in den Spalt fallen, während die leichteren Polyolefinbestandteil über den Spalt hinweggefördert werden. Ebenso ist es möglich den Materialstrom von unten mit einem Gasstrom zu beschicken, durch den leichtere Bestandteile nach oben getrieben werden. Da die schwereren Bestandteile weniger Auftrieb erfahren, lassen sie sich durch eine derartige Vorrichtung gut von den leichteren Bestandteilen abtrennen. Schließlich kann zum Entfernen von Bestandteilen mit größerem spezifischem Gewicht auch ein Schwimm/Sink-Verfahren genutzt werden, bei dem die Tatsache ausgenutzt wird, dass Polyolefine leichter sind als Wasser. Im Rahmen eines solchen Verfahren werden die Polyolefinbestandteile daher als auf dem Wasser aufschwimmende Fraktion erhalten, während Bestandteile wie Glas und Metalle im Wasser absinken und als Bodensatz abgetrennt werden können.

Für die im vorstehenden angegebene Abtrennung von Bestandteilen mit höherem spezifischem Gewicht ist es zweckmäßig, wenn diese einem Zerkleinern des Ausgangsmaterials nachgeschaltet ist, da dadurch ein einheitlicheres Ausgangsmaterial vorliegt. Zudem hat ein vorgeschaltetes Zerkleinern den Vorteil, dass auch Verunreinigungen entfernt werden können, die sich vor dem Zerkleinern in Hohlräumen des Polyolefin-Ausgangsmaterials befinden.

Es kann weiterhin zweckmäßig sein, wenn das Ausgangsmaterial vor dem Zerkleinern grob nach Farben und/oder Polymer sortiert wird, wobei insbesondere eine grobe Aufteilung in transparente, weiße und (Rest)farbige Bestandteile und die Polymer-Arten vorgenommen werden kann. Unter einer "groben" Farbsortierung ist zu verstehen, dass eine Aufteilung der Ausgangsmaterialien nach ihrer Hauptfarbe erfolgen soll, wobei gemischtfarbige Consumer Produkte derjenigen Farbfraktion zugeordnet werden, die ihrer Hauptfarbe entspricht. Analog gilt für die "grobe" Polymer-Sortierung, dass es sich um eine Sortierung nach Hauptpolymer handelt. So tragen z.B. HDPE-Flaschen häufig PP-Verschlüsse; in diesem Fall würden diese Flaschen den HDPE-Polymeren zugeordnet.

Um Verschleppungen von verunreinigtem Waschwasser zu vermeiden ist es sinnvoll, die aus dem Schritt (i) erhaltene Polyolefin-Reststofffraktion möglichst vollständig mechanisch zu entwässern, bevor diese folgenden Verfahrensschritten unterzogen wird.

Im zweiten Schritt (ii), der auch als Heißwäsche bezeichnet wird, wird die Polyolefin-Reststofffraktion bei erhöhter Temperatur mit einer alkalischen wässrigen Lösung behandelt. In diesem Schritt werden zum einen auf den Ausgangsmaterial haftende Klebstoffreste oder aufgedruckte Etiketten gelöst und entfernt, zum anderen aber auch Restkontaminationen entfernt, die im Rahmen der Kaltwäsche nicht vom Ausgangsmaterial abgetrennt werden konnten. Die Angabe "aufgedruckte Etiketten" bezeichnet z.B. Tinten, die direkt auf Verpackungen wie Trink- oder Shampooflaschen gedruckt wurden. Beispielsweise werden alkoholfreie Getränkeflaschen häufig mit Epoxy-basierten Tinten bedruckt. Darüber hinaus lassen sich durch die alkalische Behandlung Polymerbeschichtungen auf Basis von Acrylaten oder Ethylen-Vinylalkohol (z.B. EVOH Filme) entfernen.

Der Schritt (ii) wird zweckmäßig bei einer Temperatur von mindestens 60°C, insbesondere mindestens 70 °C und bevorzugt im Bereich von 80 bis 90°C, meist bevorzugt 80 bis 85 °C durchgeführt. Alternativ oder zusätzlich dazu ist es für den Schritt (ii) bevorzugt, wenn es sich bei dem alkalischen Medium um eine wässrige Alkalilauge, insbesondere um eine wässrige Natron- oder Kalilauge und bevorzugt um eine wässrige Natronlauge handelt. Die Konzentration der Natronlauge in Bezug auf Natriumhydroxid sollte 10 Gew.-% nicht übersteigen, da dies in der Regel höhere Anforderungen an die Vorrichtungen stellt, in der der Schritt (ii) durchgeführt wird. Da sich herausgestellt hat, dass die meisten Verunreinigungen bereits bei niedrigeren Natriumhydroxidgehalten entfernt werden können, kann ein Konzentrationsbereich von 0,5 bis 5 Gew.-% für die Natronlauge als bevorzugt angegeben werden. Ein besonders bevorzugterer Konzentrationsbereich liegt bei 1 bis 3 Gew.-%.

Nach dem Schritt (ii) und vor dem anschließenden Schritt (iii) ist es sinnvoll, die Reststofffraktion zu trocknen, wofür bekannte Trocknungverfahren zum Einsatz kommen können. Beispiele für geeignete Trockungsvorrichtungen sind z.B. Fließbetttrockner, Umlufttrockner oder Adsorptionstrockner. Vor dem Trocknen kann es zudem zweckmäßig sein, wenn die aus dem Schritt (ii) abgeleitete Polyolefin-Reststofffraktion mit Wasser gewaschen wird, um das im Schritt (ii) verwendete alkalische Medium möglichst vollständig zu entfernen. Dies gilt insbesondere, wenn das alkalische Medium anorganische Bestandteile enthält, die sich in den folgenden Prozessschritten nur mit größerem Aufwand wieder von der Polyolefin Reststofffraktion entfernen lassen. Da ein Trocknen unter Verdampfung oder Verdunstung des Wassers aus der alkalischen wässrigen Lösung erfolgt, ist es zudem zweckmäßig, die Reststofffraktion vor dem Trocknen einer mechanischen Entwässerung zu unterziehen, um das Zurückbleiben und Verschleppen von im Wasser gelösten Bestandteilen weitestgehend zu minimieren.

Nach dem im vorstehenden geschilderten Trocknen kann es weiterhin sinnvoll sein, wenn die Polyolefin Reststofffraktion einem Schritt des Windsichtens unterzogen wird, bei dem Etikettenrückstände abgetrennt werden können. Ein Windsichten ist insbesondere bei Reststofffraktion zweckmäßig, die bedruckte oder anderweitig stark verschmutzte Etiketten oder Kunststofffolien enthalten. Da diese in der Regel im Vergleich zu Partikeln aus Kunststoffverpackungen sehr dünn sind, lassen sie sich über ein Windsichten zu einem wesentlichen Anteil von den Hauptbestandteilen der Reststofffraktion abtrennen.

Im Schritt (iii) des erfindungsgemäßen Verfahrens wird die Polyolefin-Reststofffraktion einer Flakesortierung unterzogen wobei das Material in erster Linie nach Farben sortiert wird. So können im Rahmen der Flakesortierung insbesondere Partikelgemische in farblose/transparente Partikel, weiße Partikel und restfarbige Partikel getrennt werden. Darüber hinaus ist es aber auch möglich eine weitergehende Trennung der farbigen Partikel nach Farben vorzunehmen.

Zweckmäßig ist die Flakesortierung so ausgelegt, dass auch Restbestandteile von Materialien entfernt werden können, die nicht dem Hauptmaterial der in die Flakesortierung eingebrachten Reststofffraktion entsprechen. Enthält die Reststofffraktion z.B. HDPE als Hauptbestandteil, so können bei einer entsprechenden Flakesortierung Restanteile von Polypropylen oder anderen Polyolefinkunststoffen, aber auch noch vorhandene Reste von anderen Kunststoffen oder Nicht-Kunststoffen abgetrennt werden. Darüber hinaus ist es, insbesondere zur Gewinnung von transparenten oder weißen Partikeln möglich, von diesem stark verunreinigte oder bedruckte Partikel abzutrennen, um so ungewünschte Verfärbungen bei der Weiterverarbeitung der Partikel zu vermeiden.

Bei der für die Flakesortierung genutzten Vorrichtung handelt es sich vorzugsweise um ein sensorgestütztes Sortiersystem. Sensorgestützte Sortiersysteme können aus einer Bandstrecke zur Vereinzelung und Beruhigung des Materials, einem Detektor oder mehreren Detektoren, die unterhalb oder oberhalb eines Förderbands oder im Bereich des Materialabwurfs angeordnet sind, und einer Düsenleiste, mit der die positiv zu sortierende Materialkomponente ausgetragen wird, bestehen. Alternativ kann das Material über Vibrorinnen auf steil stehende Rutschen-Kanäle verteilt werden, an deren Ende jeweils die Partikel im freien Fall an den Detektoren vorbeigeführt werden.

Das Sortieren der Partikel, insbesondere zur Trennung von Partikeln aus verschiedenen Materialien, erfolgt zweckmäßig unter Nutzung von NIR (Near Infrared) Detektoren. Zur Trennung von Partikeln mit verschiedenen Farben können auch konventionelle Farbkameras zum Einsatz kommen. Für die farbigen Fraktionen kann es zudem sinnvoll sein, einen Nachsortierschritt zum Einsatz zu bringen, der die Einhaltung eines definierten Farbspektrums sicherstellt. Dabei wird über eine Detektionseinheit im Standardbetrieb die Farbzusammensetzung zunächst lediglich gemessen und gegen einen Farbstandard abgeglichen, ohne das Partikel ausgetragen werden. Erst wenn die Farbzusammensetzung über einen festzulegenden Toleranzbereich vom Farbstandard abweicht, wird sortiert, in dem Partikel der jeweils überschüssigen Farbe ausgetragen werden.

Geeignete Vorrichtungen zur Flakesortierung werden beispielsweise von der Firma Bühler GmbH unter der Bezeichnung SORTEX oder von der Firma Steinert Global unter der Bezeichnung UniSort vertrieben.

Wie vorstehend angegeben können farbgemischte Ausgangsprodukte in das erfindungsgemäße Verfahren einbezogen werden, die eine verhältnismäßig homogene Farbverteilung aufweisen. So kann ein farbgemischtes Ausgangsprodukt, dass z.B. 20 bis 45 Gew.-% an transparenten, 20 bis 45 Gew.- % an weißen und 20 bis 45 Gew.-% an restfarbigen Bestandteilen aufweist, der Flakesortierung unterzogen werden. Da konventionelle Farbsorter auf eine Abtrennung verhältnismäßig kleiner Anteile an Fehlfarben (z.B. « 5 %) aus einem Feedstrom optimiert sind, kann mit solchen Farbsortern eine für eine annehmbare Produktqualität erforderliche Farbreinheit nicht ohne weiteres erzielt werden.

In Rahmen der dieser Anmeldung zugrundeliegenden Untersuchungen wurde überraschend festgestellt, dass sich eine hohe Farbreinheit bei Verwendung von stark farbgemischten Ausgangsmaterialien durch ein Hintereinanderschalten mehrerer Farbsorter sicherstellen lässt. Enthält das Ausgangsmaterial daher wesentliche Anteile (20 Gew.-% oder mehr, bezogen auf das Gesamtgewicht des zu sortierenden Zielpolymers im Ausgangsmaterial) an Bestandteilen, die nicht der Hauptfarbe des Ausgangsmaterials entsprechen (z.B. 20 Gew.-% restfarbige und 80 Gew.-% weiße Partikel) ist der Einsatz von zwei hintereinandergeschalteten Farbsortern zweckmäßig um die Farbreinheit des aus dem ersten Farbsorter erhaltenen Produkts auf ein sinnvolles Maß zu erhöhen. Enthält das Ausgangsmaterial signifikante Anteile (d.h. 10 Gew.-% oder mehr, bezogen auf das Gesamtgewicht des zu sortierenden Zielpolymers im Ausgangsmaterial) an weißen, transparenten und bunten Bestandteilen, so ist es zudem bevorzugt, wenn im Rahmen der Flakesortierung in einem ersten Schritt weiße und transparente Bestandteile von restfarbigen Bestandteilen und anschließend in einem zweiten Schritt die weißen von den transparenten Bestandteilen getrennt werden.

Ein Problem heute verfügbarer Farbsorter besteht in deren Abstimmung dahingehend, dass gewünschte Bestandteile im Produkt verbleiben, während nicht gewünschte Bestandteile selektiv aus der Mischung ausgetragen werden. Technisch lassen sich Farbsorter nicht so einstellen, dass ein Produkt mit hoher Ausbeute und mit hoher Reinheit (> 95%) in einem oder auch mehreren hintereinandergeschalteten Farbsortern erhalten wird. Ein gewisses Maß an Übersortierung, d.h. ein Fehlaustrag von gewünschten Bestandteilen mit den nicht gewünschten Bestandteilen, lässt sich technisch nicht vermeiden.

Ein besonders günstiges Trennergebnis im Sinne eines Produkts mit guter Farbqualität (d.h. einem Anteil an falschfarbigen Partikeln von vorzugsweise etwa 2% oder weniger und insbesondere etwa 1% oder weniger) und hoher Ausbeute lässt sich erfindungsgemäß durch eine Einheit von drei Farbsortern erzielen, bei denen der erste Farbsorter eine gewünschte Farbkomponente (z.B. weiß/transparent) von einer nicht gewünschten Farbkomponente (z.B. Restfarbe) abtrennt. Auf Grund der in konventionellen Farbsortern unvermeidlichen Fehlsortierung enthalten die aus diesem Farbsorter erhaltenen Fraktionen der gewünschten und nicht gewünschten Farbkomponente noch signifikante Restanteile an nicht gewünschter bzw. gewünschter Farbkomponente. Die Fraktion mit überwiegend gewünschter Farbkomponente wird daher einem zweiten Farbsorter zugeleitet, der das aus dem ersten Farbsorter erhaltene Produkt nachsortiert, und dort den Anteil an gewünschter Farbkomponente weiter erhöht. Schließlich ist in der Einheit ein dritter Farbsorter vorgesehen, dem die Fraktion mit überwiegend nicht gewünschter Farbkomponente aus dem ersten Farbsorter zugeleitet wird und in dem der Anteil der nicht gewünschten Farbkomponente weiter erhöht wird.

Die im dritten Farbsorter erhaltene angereicherte nicht gewünschte Farbkomponente kann anschließend zweckmäßig einer weiteren Einheit, wie vorstehend beschrieben, zugeleitet werden, in der von dieser eine weitere Farbkomponente (z.B. rot/gelb) nach dem gleichen Schema abgetrennt wird. Die im zweiten und dritten Farbsorter erhaltenen aussortierten Fraktionen enthalten hingegen jeweils noch signifikante Anteile an gewünschter Farbfraktion und werden deshalb dem ersten Farbsorter als Ausgangsmaterial wieder zugeführt. Die im zweiten Farbsorter erhaltene angereicherte nicht gewünschte Farbkomponente wird, falls die Farbkomponente mehrere Farben enthält (z.B. weis/transparent), zweckmäßig einer weiteren Einheit, wie vorstehend beschrieben, zugeleitet, in der von dieser eine weitere Farbkomponente (z.B. transparent) abgetrennt wird.

Handelt es sich bei dem zu trennenden Ausgangsmaterial um ein Gemisch aus mehr als drei verschieden farbigen Bestandteilen, z.B. ein Gemisch aus weißen/farblosen/roten/gelben/grünen/blauen Bestandteilen, so umfasst die Trennung bevorzugt mindestens zwei Einheiten, wie vorstehend beschrieben, wobei in der ersten Einheit ein Farbpaar, z.B. weiß/farblos, von den restfarbigen Bestandteilen getrennt wird und in der zweiten Einheit das Farbpaar in die einzelnen farbigen Bestandteile aufgetrennt wird. Die Abtrennung eines Farbpaars in der ersten Einheit (anstelle nur von Material von nur einer Farbe) hat den Vorteil, das bei in Bezug auf die Farbe annähernd gleich verteilten Mischungen die Menge der auszusortierenden Partikel und der in der Mischung zu belassenden Partikel ähnlicher ist, was ein besseres Mengenmanagement in der Gesamtanlage ermöglicht.

Enthalten die restfarbigen Bestandteile ebenfalls mehrere Farben, z.B. rote/gelbe/grüne/blaue Bestandteile, so ist zweckmäßig eine weitere Einheit vorgesehen, in der ein weiteres Farbpaar, z.B. rote/gelbe Bestandteile, von den restfarbigen Bestandteilen (z.B. grün/blau) abgetrennt werden kann. Bei Gemischen mit weißen/farblosen/roten/gelben/grünen/blauen Bestandteilen ist eine Abtrennung von 1. weißen/farblosen, 2. roten/gelben und 3. grünen/blauen Bestandteilen in dieser Reihenfolge besonders bevorzugt. Weiterhin vorzugsweise ist für jede der so erhaltenen Farbpaare jeweils eine weitere Einheit von drei Farbsortern, wie vorstehend beschrieben, vorgesehen, in der die Farbpaare in die einzelnen farbigen Bestandteile aufgetrennt werden.

Die beschriebenen Einheiten aus Farbsortern und von Anordnungen von mehreren dieser Einheiten bietet gegenüber den bisher verführbaren Trennprozessen den Vorteil, dass annähernd gleichverteilte Mischungen in mehrere definierte Produkte mit hohen Reinheiten getrennt werden können. Bei einer vergleichbaren Anordnung mit nur linear hintereinandergeschalteten Farbsortern wären hingegen entweder die Ausbeuteverluste oder die Anzahl der erforderlichen Trennschritte sehr groß, was die Kosteneffizienz der Trennung stark beeinträchtigen würde.

Es ist möglich neben den erwähnten Einheiten von Farbsortern noch weitere einzelne Farbsorter in die Aufreinigung der Polyolefin-Reststofffraktion einzubeziehen. Derartige Farbsorter können z.B. für eine weitere Verminderung der Fehlfarbbestandteile in den aufgereinigten farbreinen Fraktionen eingesetzt werden, um die Produktqualität weiter zu verbessern.

Im Anschluss an die Flakesortierung im Schritt (iii) werden die erhaltenen Polyolefin-Reststofffraktionen in Schritt (iv), wie vorstehend beschrieben einer Behandlung bei einer Temperatur im Bereich von 50 bis 155°C unterzogen, wobei diese Behandlung zweckmäßig für einen Zeitraum von mindestens 60 Min durchzuführen ist. Durch diese Behandlung sollen in der Polyolefin Reststoffraktion enthaltene Schadstoffe, Migrationsprodukte bzw. Kontaminierungen, die in die äußerste Schicht des Gebindes eindiffundiert sind, möglichst weitgehend abgeschieden werden.

Die Verfahrensparameter richten sich nach der Inertheit und den chemischen und physikalischen Eigenschaften des entsprechenden Polymers. So ist darauf zu achten, dass die Behandlungstemperatur möglichst höher als die Glasübergangstemperatur, aber niedriger als die Schmelztemperatur des zu behandelnden Kunststoffs ist. Dies gewährleitet einerseits, dass die Molekülketten eine ausreichende Mobilität aufweisen, um Migrationsstoffe freisetzen zu können, andererseits aber nicht aufschmelzen oder erweichen, was zu einem Verklumpen der einzelnen Partikel führen würde.

Als geeignete Temperaturbereiche für die gebräuchlichsten Poleolefine HDPE, LDPE und Polypropylen kann folgendes angegeben werden:

| | |
|---|---|
| HDPE: | 50 bis 130 °C, bevorzugt 90 bis 122 °C, meist bevorzugt 110 bis 115 °C |
| LDPE: | 50 bis 110 °C, bevorzugt 75 bis 105 °C |
| Polypropylen: | 50 bis 155 °C, bevorzugt 100 bis 150 °C |

Über die Verweilzeit wird sichergestellt, dass eine Mindestreinigung des Materials erfolgt. Die Verweilzeit richtet sich nach unterschiedlichen Kriterien, wie der Diffusionsgeschwindigkeit der Migrationsprodukte im entsprechenden Polymer und der Erweichungs- bzw. Schmelztemperatur des Polymers. Wie vorstehend angegeben sollte die Verweilzeit für ein möglichst vollständiges Entfernen von Migrationsprodukten mindestens etwa 60 Min betragen. Bevorzugt beträgt die Verweilzeit mindestens etwa 120 Min, sollte aber eine Verweilzeit von etwa 600 Min nicht übersteigen da bei Polyolefinen bei Verweilzeiten von mehr als 600 Min in der Regel keine weiter verbesserte Entfernung von Migrationsstoffen zu beobachten ist. Als im Rahmen der Erfindung besonders geeignete Verweilzeit kann ein Zeitraum von etwa 180 bis 360 Min und insbesondere 180 bis 240 Min angegeben werden.

Die Abtrennung von Migrationsstoffen im Rahmen des Schritts (iv) lässt sich durch Anlegen eines Vakuums positiv beeinflussen. Das Anlegen eines Vakuums ist zudem mit den Vorteilen verbunden, dass die Migrationsstoffe über das Vakuum aus der Vorrichtung, in der die Temperaturbehandlung erfolgt, entfernt werden können, und dass die Kunststoffe bei den hohen Temperaturen keiner Sauerstoff-haltigen Atmosphäre ausgesetzt werden, in der es zu einer oxidativen Schädigungen der Kunststoffe kommen kann. Wird die Temperaturbehandlung unter Vakuum durchgeführt, so ist hierzu zweckmäßig ein Druck von ≤ 150 mbar, vorzugsweise ≤ 50 mbar, insbesondere ≤ 20 mbar und meist bevorzugt zwischen 0,1 und 2 mbar einzustellen.

Da sich eine oxidative Schädigung auch unterdrücken lässt, indem die Temperaturbehandlung in einem inerten Gas durchgeführt wird, kann die Behandlung im Schritt (iv) auch in einer Inertgasatmosphäre durchgeführt werden. Die Angabe "Inertgasatmosphäre" ist dabei nicht notwendigerweise so zu verstehen, dass das Inertgas innerhalb der gesamten Vorrichtung vorliegen muss. Vielmehr ist es ausreichend, wenn das Inertgas in dem Bereich der Vorrichtung vorliegt, der die erhitzten Partikel direkt umgibt. Als inerte Gase kommen insbesondere Stickstoff und Argon in Betracht, von denen jedoch Stickstoff aus Kostengründen bevorzugt ist.

Für die Temperaturbehandlung geeignete Vorrichtungen werden z.B. von der Firma Erema (AT) unter der Bezeichnung VACUREMA vertrieben.

Zwischen den Schritten (iii) und (iv) wird die die aus Schritt (iii) erhaltene Reststofffraktion zweckmäßig zur Herstellung eines Polyolefingranulats einer Extrusionsvorrichtung zugeführt wird. Diese kann so ausgelegt sein, dass die aus dem Schritt (iii) erhaltenen Partikel lediglich plastisch zu einem Granulat verformt werden, es ist aber auch möglich, dass während der Extrusion Zusatzstoffe, z.B. in Form von Farbmitteln oder Pigmenten, zugeführt werden. Im Zusammenhang z.B. mit Polypropylen können zudem während der Extrusion für eine Kompoundierung übliche Zuschlagstoffe wie Peroxide oder Talkum zugeführt werden. Da bei der Extrusion von Polypropylen, in das solche Zuschlagstoffe einbezogen wurden, Geruchsstoffe entstehen, die vom Verbraucher als unangenehm empfunden werden können, ist es in diesem Fall von Vorteil, wenn die Extrusion vor dem Schritt (iv) durchgeführt wird, da dort die gebildeten Geruchsstoffe zumindest zum Teil wieder entfernt werden können. Dadurch lassen sich unangenehme Gerüche sogar im Vergleich zu mit Talkum kompoundierter Polypropylenneuware reduzieren.

Im Rahmen der Extrusion kann das Material zudem durch Anlegen eines Vakuums entgast und von flüchtigen Inhaltsstoffen in der Polyolefinschmelze befreit werden. Hierbei ist jedoch zu beachten, dass ein solches Entgasen die Temperatur-behandlung im Schritt (iv) nicht ersetzen kann, weil die Entgasung für einen Zeitraum durchgeführt werden müsste, die kein wirtschaftliches Betreiben der Extrusionsvorrichtung ermöglicht.

Wird die aus Schritt (iii) erhaltene Reststofffraktion einer Extrusion zugeführt, so ist die Extrusionsvorrichtung zweckmäßig direkt vor der Vorrichtung zur Temperaturbehandlung im Schritt (iv) angeordnet, da das Material dort bereits erhitzt wurde. Da die Temperaturbehandlung ebenfalls bei erhöhter Temperatur durchgeführt wird ist daher bei einer solchen Anordnung weniger Energie erforderlich, als wenn das Material nach der Extrusion zunächst abkühlt, um dann wieder auf die im Rahmen der Temperaturbehandlung vorgesehene Temperatur erhitzt werden zu müssen. Um zu vermeiden, dass es durch Transportschritte zwischen Extruder und Behandlungsbehälter zu Energieverlusten kommt, können Maßnahmen, wie z.B. Transporteinrichtungen, Isolationen, zusätzliches Vakuum im Überführungsbereich etc., getroffen werden.

In Einzelfällen ist es auch möglich sein, erst nach den Schritten (iii) und (iv) eine Extrusion zu einem Granulat durchzuführen. Dies hat jedoch den Nachteil, dass die Reststofffraktion vor einer Granulierung in der Regel noch kleine Partikel wie Folienflusen enthält, die bei einer Temperaturbehandlung unter Vakuum ausgetragen werden können. Bei einer solchen Prozessführung wäre daher der Einbau von Filtern unumgänglich, die zudem in relativ kurzen Abständen gereinigt werden müssten. Zudem weisen die Polyolefinpartikel vor einer Verarbeitung zu einem Granulat ein relativ großes Volumen auf, was den Durchsatz durch die Vorrichtung zur Temperaturbehandlung begrenzt.

Ein weiterer Nachteil einer dem Schritt (iv) nachgeschalteten Extrusion besteht darin, dass durch die thermische Belastung des Materials während der Extrusion erneut Substanzen generiert werden können, die zu einem unangenehmen Geruch des Produkts führen. Solche Substanzen können bei einer dem Schritt (iv) vorgeschalteten Extrusion über den Schritt (iv) reduziert werden; bei einer dem Schritt (iv) nachgeschalteten Extrusion ist dies hingegen nicht möglich.

Eigentlich sollte man annehmen, dass sich eine Verarbeitung zu einem Granulat vor der Temperaturbehandlung ungünstig auf die Produkteigenschaften und die erforderliche Temperaturbehandlungszeit auswirkt. So können zum Einen während der Extrusion aus Migrationsstoffen Zersetzungsprodukte entstehen, die sich nur schlecht wieder aus dem Granulat entfernen lassen, zum Anderem sind Migrationsstoffe in der Regel an der Oberfläche der Partikel vorhanden und sollten deshalb über die Temperaturbehandlung leichter entfernbar sein, als Migrationsstoffe, die sich in Folge der Extrusion in den Granulatpartikeln verteilt haben. Überraschend wurde jedoch festgestellt, dass diese Effekte nur geringfügige Auswirkungen auf das Produkt haben und durch die Vorteile eines Granulats für die Temperaturbehandlung überkompensiert werden. Darüber hinaus kühlt ein Granulat auf Grund seiner kompakteren Struktur weniger schnell ab als das Polymermaterial vor der Granulierung, sodass bei einer direkten Zuleitung des Granulats in die Temperaturbehandlung in Schritt (iv) insgesamt weniger Energie für die Granulierung und Temperaturbehandlung erforderlich ist als bei umgekehrter Verfahrensführung.

Im Rahmen der der vorliegenden Erfindung zugrundeliegenden Untersuchungen hat sich gezeigt, dass es für die Qualität des erhaltenen Produkts von wesentlicher Bedeutung ist, dass die Schritte (ii) und (iii) vor dem Schritt (iv) durchgeführt werden und ein Granulierungsschritt, sofern einbezogen, nach der Flakesortierung stattfindet. Weiterhin ist es für das Verfahren wesentlich, dass die Heißwäsche vor der Temperaturbehandlung durchgeführt wird.

Wie vorstehend angegeben betrifft die vorliegende Erfindung auch ein Verfahren, bei dem die Schritte (ii) und (iii) in umgekehrter Reihenfolge durchgeführt werden. In diesem Fall kann z.B. die Flakesortierung (iii) vor der Heißwäsche (ii), die Heißwäsche (ii) vor einer Granulierung und die Granulierung vor der Temperaturbehandlung (iv) durchgeführt werden. Ebenso betrifft die vorliegende Erfindung in dieser Ausführungsform ein Verfahren, bei dem die Flakesortierung (iii) vor der Heißwäsche (ii), die Heißwäsche (ii) vor der Temperaturbehandlung (iv) und die Temperaturbehandlung (iv) vor einer Granulierung durchgeführt wird.

Letzteres Verfahren ist jedoch im Vergleich zu dem vorherigen Verfahren mit den gleichen Nachteilen verbunden, die im Vorstehenden für eine Verfahrensführung mit Temperaturbehandlung (iv) vor der Granulierung beschrieben wurden. Für bevorzugte Ausführungsformen der Heißwäsche, Flakesortierung, Temperaturbehandlung und Granulierung gelten die vorstehenden Ausführungen hierzu analog.

In Bezug auf die Abfolge der einzelnen Reaktionsschritte ist in einer Ausführungsform eine Verfahrensführung mit der Abfolge Heißwäsche (Schritt ii), Flakesortierung (Schritt iii), Granulierung und Temperaturbehandlung (Schritt iv) besonders bevorzugt.

Ohne dass sich der Anmelder hierzu auf eine bestimmt Theorie berufen kann wird vermutet, dass Polyolefinreststoffe aus Consumerprodukten Verunreinigungen, z.B. in Form von Aufdrucken aufweisen, die im Rahmen der Heisswäsche zunächst von den Polyolefinpartikeln abgelöst werden. Ebenso ist es möglich, dass die Polyolefinreststoffe Etiketten aus anderen Polyolefinen, z.B. aus Polypropylen aufweisen, die im Rahmen der Heisswäsche vom Hauptprodukt abgelöst werden. Selbst wenn diese Etiketten über ein Windsichten im Wesentlichen aus dem so vorbehandelten Material entfernt werden, können geringe Restanteile der Etiketten im Material verbleiben. Wird dieses Material im Anschluss direkt einer thermischen Behandlung unterzogen, kann es zu einem erneuten Anhaften der Rückstände kommen, insbesondere wenn das Etikettenmaterial einen Erweichungspunkt oder eine Glastemperatur aufweist, die unterhalb oder im Bereich der Temperatur liegt, bei der die Polyolefinreststoffe im Schritt (iv) behandelt werden. Solche Anhaftungen könnten in einer nachgeschalteten Flakesortierung schwerer zu erfassen sein, was zur Folge hätte, dass das erhaltene Produkt stärker verunreinigt ist als bei einer Vorgehensweise mit der Abfolge Heißwäsche (Schritt ii), Flakesortierung (Schritt iii) und Temperaturbehandlung (Schritt iv).

In einer anderen Ausführungsform ist eine Verfahrensführung mit der Abfolge Flakesortierung (Schritt iii), Heißwäsche (Schritt ii), Granulierung und Temperaturbehandlung (Schritt iv) besonders bevorzugt. Diese Ausführungsform ist insbesondere dann mit Vorteilen verbunden, wenn Abnehmer nur für einen Teil der Produkte (z.B. weiße aber nicht restfarbige oder transparente Produkte) vorhanden sind. Da die Heißwäsche mit einem verhältnismäßig hohen Energieaufwand verbunden ist, kann es daher sinnvoll sein, die Menge des durch die Heißwäsche zu reinigenden Materials über die Flakesortierung zu reduzieren, um nur dasjenige Material über die Heißwäsche weiter aufzureinigen, für das ein relevanter Markt besteht.

Das erfindungsgemäße Verfahren kann batchweise oder zum Teil batchweise durchgeführt werden indem alle oder ein Teil der Schritte (i) bis (iv) mit einzelnen Chargen der Polyolefinreststoffe durchgeführt werden. Da dies mit einem größeren technischen Aufwand und Leerstandzeiten einzelner Vorrichtungsbestandteile verbunden ist, ist es aber bevorzugt, wenn die Schritte (i) bis (iv) kontinuierlich durchgeführt werden.

Ein weiterer Aspekt der vorliegenden Erfindung betrifft ein nach dem im Vorstehenden geschilderten Verfahren erhältliches Polyolefin-Rezyklat. Bevorzugt handelt es sich bei diesem Rezklat um ein LDPE, HPDE oder Polypropylen-Rezyklat.

### Kurze Beschreibung der Zeichnungen

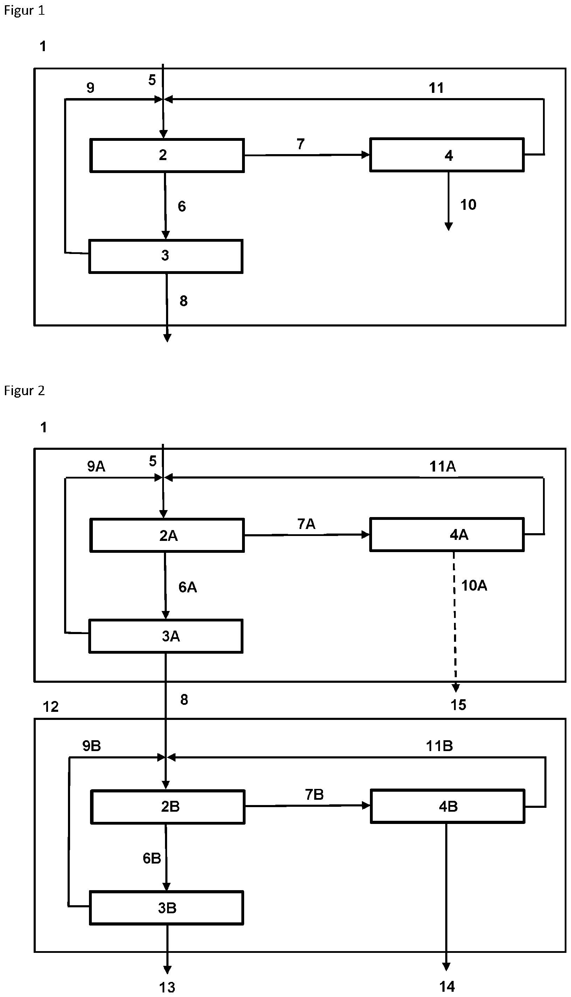

Figur 1 beschreibt eine Einheit 1 aus drei Farbsorter **2, 3,** und **4.** In die Einheit wird Polyoelfin-Reststofffraktion über die Zuleitung 5 eingespeist. Im ersten Farbsorter 2 wird die Polyoelfin-Reststofffraktion in eine gewünschte Farbfraktion 6 (z.B. weiß/transparent) und eine nicht gewünschte Farbfraktion **7** (z.B. Restfarbe) getrennt. Die gewünschte Farbfraktion **6** wird anschließend dem zweiten Farbsorter **3** zugeleitet, in dem Restanteile der nicht gewünschten Farbfraktion **9** aus der Mischung abgetrennt und eine weitere aufgereinigte gewünschte Farbfraktion **8** generiert wird. Die im ersten Farbsorter erhaltene nicht gewünschte Farbfraktion **7** wird dem dritten Farbsorter **4** zugeleitet, in dem Restanteile aus dieser gewünschte Farbfraktion **11** unter Erhalt einer aufgereinigten Fraktion an nicht gewünschter Farbfraktion **10** aus dem Gemisch **7** generiert wird. Die Anteile an gewünschter Farbfraktion **11** und nicht gewünschter Farbkfraktion **9** werden anschließend in den ersten Farbsorter **2** zurückgeleitet.
Figur 2 beschreibt eine Konstruktion mit zwei hintereinandergeschalteten Einheiten **1** und **12,** wobei in der ersten Einheit **1** mit drei Farbsortern **2A, 3A** und **4A** ein Farbpaar (z.B. weiß/transparent) aus dem Gemisch an Polyoelfin-Reststofffraktion abgetrennt wird. Das aus der ersten Einheit erhaltene Farbpaar wird dann über die Zuleitung **8** in die zweite Einheit **12** eingespeist, in der das Farbpaar in die Einzelbestandteile (d.h. weiß einerseits und transparent andererseits) getrennt wird. Dabei durchläuft das Farbpaar analog der ersten Einheit **1** drei Farbsorter **2B, 3B** und **4B.** Als Produkt werden die sehr farbreinen Einzelbestandteile des Farbpaars **13** (z.B. transparent) und **14** (z.B. weiß) erhalten. Die im dritten Farbsorter **4A** der ersten Einheit 1 erzeugte aufgereinigte Restfraktion **10A** wird einer weiteren Farbsortereinheit **15** zugeführt, und dort weiter aufgereinigt, wobei diese Einheit analog aufgebaut ist, wie die Einheiten **1** und **12.**

### Beispiel:

Trennung eines Polyolefin-Reststoffgemischs mit einem Anteil an weißen/transparenten und restfarbigen Flakes von 34%, 34% beziehungsweise 32%.

Das angegebene Gemisch wird einer ersten Einheit **1** aus drei Farbsortern **2A, 3A** und **4A** zugeführt. Im ersten Farbsorter werden aus dem Gemisch restfarbige Flakes abgetrennt, so dass eine gereinigte Fraktion aus weißen/transparenten Flakes **6A** mit einer Verteilung von weiß/transparent/restfarbig von etwa 47,5%/47,5%/5% erhalten wird. Das aussortierte Gemisch **7A** besteht aus weißen/transparenten/restfarbigen Flakes mit einer Verteilung von etwa 20%/20% und 60%. Die gereinigte weiß/transparent Fraktion **6A** wird dem zweiten Farbsorter **3A** zugeleitet, in dem die Fraktion nachgereinigt wird. Dabei wird eine Reinfraktion **8** mit einer Verteilung von etwa 49,5%/49,5%/1% an weißen/transparenten/restfarbigen Flakes erhalten. Die bei der zweiten Reinigung erhaltene Nebenfraktion **9A** weist eine Verteilung von etwa 40%/40%/20% weiße/transparente/restfarbige Flakes auf, und wird in den ersten Farbsorter **2A** zurückgeleitet. Das aussortierte Gemisch **7A** aus dem ersten Farbsorter **2A** wird in dem dritten Farbsorter **4A** geleitet und dort in eine Fraktion vorwiegend restfarbiger Flakes **10A** (Verteilung weiß/transparent/restfarbig 2,5%/2,5%/95%) und eine Fraktion **11A,** in der transparente und weiße Flakes angereichert sind, getrennt (Verteilung weiß/transparent/restfarbig 32,5%/32,5%/35%). Diese angereicherte Fraktion **11A** wird ebenfalls in den ersten Farbsorter **2A** zurückgeleitet.

Das in der ersten Einheit erhaltene Gemisch 8 aus transparenten/weißen Flakes wird einer zweiten Trennungseinheit **12** mit drei Farbsortern **2B, 3B** und **4B** zugeleitet. Im ersten Farbsorter **2B** werden weiße von transparenten Flakes getrennt, wobei eine in Bezug auf transparente Flakes angereicherte Fraktion **6B** (Verteilung weiß/transparent/restfarbig 6%/93%/1%) und eine in Bezug auf weiß angereicherte Fraktion **7B** (Verteilung weiß/transparent/restfarbig 66%/33%/1%) erhalten wird. Die in Bezug auf transparente Flakes angereicherte Fraktion **68** wird im zweiten Farbsorter **3B** unter Erhalt eines Gemischs **13** weißer/transparenter/restfarbiger Flakes 6%/93,5%/0,4% und einer Restfraktion **9B** mit einer Verteilung von weiß/transparent/restfarbig 6%/88%/6% weiter aufgereinigt.

Die in Bezug auf weiße Flakes angereicherte Fraktion **7B** wird einem dritten Farbsorter **4B** zugeführt, in dem eine weiße Farbfraktion **14** mit einer Verteilung von 95%/3,5%/1,5% weiße/transparente/restfarbige Flakes und eine Restfraktion **11B** mit einer Verteilung von 39%/60,5%/0,5% weiße/transparente/restfarbige Flakes erzeugt wird. Die Restfraktionen **9B** und **11B** aus dem zweiten und dritten Farbsorter **3B** und **4B** werden in der ersten Farbsorter **2B** der zweiten Einheit zurückgeleitet. Bei Bedarf kann dem Farbsorter **4B** auch ein weiterer Farbsorter nachgeschaltet werden, um den z.B. Anteil der restfarbigen Flakes in der weißen Farbfraktion unter 1% zu reduzieren.

## Patentansprüche

1. Verfahren zur Herstellung eines für die Herstellung von Consumer-Produkten geeigneten Polyolefin Rezyklats aus farbgemischten Polyolefin haltigen Reststoffen, umfassend die Schritte
(i) Behandeln einer farbgemischten Polyolefin-Reststofffraktion mit Wasser ohne dass thermische Energie zugeführt wird,
(ii) Behandeln der aus (i) erhaltenen Polyolefin-Reststofffraktion im Rahmen einer Wäsche mit einem alkalischen Medium bei einer Temperatur von mindestens 60°C,
(iii) Flakesortierung der aus (ii) erhaltenen Polyolefin-Reststofffraktion unter Erhalt einer oder mehrerer farbreiner Polyolefin-Reststofffraktionen, in denen jeweils ein Polyolefin in aufkonzentrierter Form vorliegt, wobei die Schritte (ii) und (iii) auch in umgekehrter Reihenfolge durchgeführt werden können,
(iv) Behandlung der aus den vorstehenden Schritten erhaltenen einen oder mehreren farbreinen Polyolefin-Reststofffraktionen bei einer Temperatur im Bereich von 50 bis 155 °C, bevorzugt für einen Zeitraum von mindestens 60 Min,
wobei die als Ausgangsmaterial in das erfindungsgemäße Verfahren einzubeziehende Reststofffraktion weiße, transparente und restfarbige Artikel in einem Anteil von jeweils etwa 20 bis 45 Gew.-% enthält, wobei die in das Verfahren einzubeziehende Reststofffraktion Verpackungen aus unterschiedlichen Anwendungen einschließlich Shampoo-und Lebensmittelverpackungen umfasst und wobei das Ausgangsmaterial vor dem Schritt (i) einem oder mehreren Schritten des Zerkleinerns unterzogen wird.

2. Verfahren nach Anspruch 1, **dadurch gekennzeichnet, dass** die eine oder mehrere farbreine Polyolefin-Reststofffraktionen zur Herstellung eines Polyolefingranulats zwischen den Schritten (iii) und (iv) oder nach dem Schritt (iv), bevorzugt zwischen den Schritten (iii) und (iv), einer Extrusionsvorrichtung zugeführt wird.

3. Verfahren nach Anspruch 1 oder 2, **dadurch gekennzeichnet, dass** der Anteil der Reststoffraktion, der die Hauptfarbe der Reststofffraktion ausmacht, nicht mehr als 40 Gew.-% beträgt.

4. Verfahren nach Anspruch 3, **dadurch gekennzeichnet, dass** die Polyolefin-Reststofffraktion in der Flakesortierung im Schritt (iii) einer Trennung mit einer Einheit (1) aus drei Farbsortern unterzogen wird, wobei die Polyolefin-Reststofffraktion einem ersten Farbsorter (2) zugeführt wird, in dem eine gewünschte Farbkomponente (6) von einer nicht gewünschten Farbkomponente (7) abgetrennt wird, die im ersten Farbsorter erhaltene gewünschte Farbkomponentene (6) einem zweiten Farbsorter (3) zugeführt wird, in dem das aus dem ersten Farbsorter erhaltene Produkt nachsortiert, und der Anteil an gewünschter Farbkomponente darin weiter erhöht wird, und die im ersten Farbsorter erhaltenen nicht-gewünschte Komponente einem dritten Farbsorter (4) zugeführt wird, in dem der Anteil der nicht gewünschten Farbkomponente weiter erhöht wird, und wobei die im zweiten und dritten Farbsorter aussortierten Fraktionen (9,11) dem ersten Farbsorter als Ausgangsmaterial wieder zugeführt werden.

5. Verfahren nach Anspruch 4, **dadurch gekennzeichnet, dass** die Flakesortierung im Schritt (iii) mehrere Einheiten aus drei Farbsortern gemäß den Vorgaben aus Anspruch 4 einbezieht.

6. Verfahren nach einem der Ansprüche 4 oder 5, **dadurch gekennzeichnet, dass** die Polyolefin-Reststofffraktion mehr als drei Farben enthält und über Einheiten (1, gegebenenfalls 15) aus drei Farbsortern (2, 3, 4) jeweils Farbpaare aus der Polyolefin-Reststofffraktion abgetrennt werden, und die Farbpaare in einer jeweils nachgeschalteten Einheit (12) in die entsprechenden Farbbestandteile aufgetrennt werden.

7. Verfahren nach einem der vorstehenden Ansprüche, **dadurch gekennzeichnet, dass** es sich bei dem Polyolefin um Polyethylen oder Polypropylen, bevorzugt um HD-Polyethylen handelt.

8. Verfahren nach einem der vorstehenden Ansprüche, **dadurch gekennzeichnet, dass** das Behandeln der Polyolefin-Reststofffraktion in Schritt (ii) bei einer Temperatur von mindestens 70 °C, bevorzugt im Bereich von 80 bis 90°C erfolgt.

9. Verfahren nach einem der vorstehenden Ansprüche, **dadurch gekennzeichnet, dass** es sich bei dem alkalischen Medium in Schritt (ii) um wässrige Natronlauge mit einer Konzentration von weniger als 10 Gew.-%, bevorzugt mit einer Konzentration im Bereich von 0,5 bis 5 Gew.-% und insbesondere mit einer Konzentration im Bereich von 1 bis 3 Gew.-% handelt.

10. Verfahren nach einem der vorstehenden Ansprüche, **dadurch gekennzeichnet, dass** im Rahmen der Flakesortierung in Schritt (iii) Partikel, die nicht aus Polyolefin bestehen, und Partikel, die farbliche Abweichungen zur überwiegenden Anzahl der Partikel in der Polyolefin-Reststofffraktion aufweisen, abgetrennt werden.

11. Verfahren nach einem der vorstehenden Ansprüche, **dadurch gekennzeichnet, dass** für die Behandlung gemäß Schritt (iv) ein Vakuum von ≤ 150 mbar, vorzugsweise ≤ 50 mbar, insbesondere ≤ 20 mbar und meist bevorzugt zwischen 0,1 und 2 mbar angelegt wird.

12. Verfahren nach einem der vorstehenden Ansprüche, **dadurch gekennzeichnet, dass** die Behandlung gemäß Schritt (iv) in einer Inertgasatmosphäre, bevorzugt in einer Stickstoffatmosphäre durchgeführt wird.

13. Verfahren nach einem der vorstehenden Ansprüche, **dadurch gekennzeichnet, dass** die Behandlung gemäß Schritt (iv) für einen Zeitraum von 120 bis 300 Min und bevorzugt 180 bis 240 Min durchgeführt wird.

14. Verfahren nach einem der vorstehenden Ansprüche, **dadurch gekennzeichnet, dass** die Polyolefin-haltigen Reststoffe vor dem Schritt (i) einer Vorsortierung nach Farben unterzogen werden.

15. Verfahren nach einem der vorstehenden Ansprüche, **dadurch gekennzeichnet, dass** die aus Schritt (ii) erhaltene Polyolefin-Reststofffraktion einer anschließenden Trocknung und einer Behandlung in einem Windsichter unterzogen werden.

## Claims

1. A method for producing a polyolefin recyclate, suitable for production of consumer products, from mixed-color, polyolefin-containing wastes, comprising the steps of
(i) treating a mixed-color polyolefin waste fraction with water, without supplying thermal energy,
(ii) treating the polyolefin waste fraction obtained from (i) by washing with an alkaline medium at a temperature of at least 60°C,
(iii) flake-sorting the polyolefin waste fraction obtained from (ii) to obtain one or more single-color polyolefin waste fractions, each comprising a polyolefin in concentrated form, wherein steps (ii) and (iii) may also be carried out in the opposite order,
(iv) treating the one or more single-color polyolefin waste fractions obtained from the preceding steps, at a temperature in the range from 50 to 155°C, preferably for a period of at least 60 minutes,
wherein the waste fraction to be included as a starting material into the inventive process contains white, transparent and residual colored components in a proportion of 20 to 45 wt% in each case, wherein the waste fraction to be included in the method comprises packaging from different applications including shampoo and food packaging and wherein the starting material prior to step (i) is subjected to one or more comminuting steps.

2. The method as claimed in claim 1, **characterized in that** the one or more single-color polyolefin waste fractions are supplied to an extrusion apparatus for producing polyolefin granules between steps (iii) and (iv) or after step (iv), preferably between steps (iii) and (iv).

3. The method as claimed in claim 1 or 2, **characterized in that** the proportion of the waste fraction accounting for the main color of the waste fraction is not more than 40 wt%.

4. The method as claimed in claim 3, **characterized in that** in the flake-sorting in step (iii), the polyolefin waste fraction is subjected to separation using a unit (1) comprising three color sorters, wherein the polyolefin waste fraction is supplied to a first color sorter (2), in which a desired color component (6) is separated off from an unwanted color component (7); the desired color component (6) contained in the first color sorter is supplied to a second color sorter (3), in which the product obtained from the first color sorter is resorted, and the proportion of desired color component therein is increased further; and the unwanted component obtained in the first color sorter is supplied to a third color sorter (4), in which the proportion of the unwanted color component is increased further; and wherein the fractions (9, 11) sorted out in the second and third color sorters are supplied again to the first color sorter as starting material.

5. The method as claimed in claim 4, **characterized in that** the flake-sorting in step (iii) incorporates a plurality of units comprising three color sorters in accordance with the mandates from claim 4.

6. The method as claimed in either of claims 4 and 5, **characterized in that** the polyolefin waste fraction contains more than three colors and, via units (1, optionally 15) comprising three color sorters (2, 3, 4), respective color pairs are separated off from the polyolefin waste fraction, and the color pairs are separated into the corresponding color constituents in a respective downstream unit (12).

7. The method as claimed in any of the preceding claims, **characterized in that** the polyolefin is polyethylene or polypropylene, preferably HD-polyethylene.

8. The method as claimed in any of the preceding claims, **characterized in that** the treating of the polyolefin waste fraction in step (ii) takes place at a temperature of at least 70°C, preferably in the range from 80 to 90°C.

9. The method as claimed in any of the preceding claims, **characterized in that** the alkaline medium in step (ii) is aqueous sodium hydroxide solution with a concentration of less than 10 wt%, preferably with a concentration in the range from 0.5 to 5 wt%, and more particularly with a concentration in the range from 1 to 3 wt%.

10. The method as claimed in any of the preceding claims, **characterized in that** as part of the flake-sorting in step (iii), particles not consisting of polyolefin and particles having color deviations relative to the numerical majority of the particles in the polyolefin waste fraction are separated off.

11. The method as claimed in any of the preceding claims, **characterized in that** for the treating according to step (iv) a vacuum of ≤ 150 mbar, preferably ≤ 50 mbar, more particularly ≤ 20 mbar, and most preferably between 0.1 and 2 mbar is applied.

12. The method as claimed in any of the preceding claims, **characterized in that** the treating according to step (iv) is carried out in an inert gas atmosphere, preferably in a nitrogen atmosphere.

13. The method as claimed in any of the preceding claims, **characterized in that** the treating according to step (iv) is carried out for a period of 120 to 300 minutes and preferably 180 to 240 minutes.

14. The method as claimed in any of the preceding claims, **characterized in that** the polyolefin-containing wastes are subjected before step (i) to a preliminary sorting by color.

15. The method as claimed in any of the preceding claims, **characterized in that** the polyolefin waste fraction obtained from step (ii) is subjected to subsequent drying and to treatment in a pneumatic classifier.

## Revendications

1. Procédé pour la fabrication d'un recyclat de polyoléfine convenant pour la fabrication de produits de consommation courante à partir de résidus contenant une polyoléfine de couleurs mélangées, comprenant les étapes suivantes :
(i) traitement d'une fraction de résidus contenant une polyoléfine de couleurs mélangées avec de l'eau, sans apport d'énergie thermique,
(ii) traitement de la fraction de résidus contenant une polyoléfine obtenue dans l'étape (i) dans le cadre d'un lavage avec un fluide alcalin à une température d'au moins 60 °C,
(iii) tri des paillettes de la fraction de résidus contenant une polyoléfine obtenue dans l'étape (ii) pour obtenir une ou plusieurs fractions de résidus contenant une polyoléfine de couleurs séparées, dans chacune desquelles une polyoléfine est présente sous une forme concentrée, les étapes (ii) et (iii) pouvant aussi être exécutées dans l'ordre inverse,
(iv) traitement des une ou plusieurs fractions de résidus contenant une polyoléfine de couleurs séparées obtenues dans les étapes précédentes à une température comprise entre 50 et 155 °C, de préférence sur une période d'au moins 60 minutes,
dans lequel la fraction de résidus à utiliser comme matière première dans le procédé selon la présente invention contient des articles blancs, transparents et contenant des résidus de couleurs dans une proportion de 20 à 45 % du poids environ respectivement, la fraction de résidus à utiliser dans le procédé comprenant des emballages de destinations différentes, y compris des emballages de shampooing et de produits alimentaires, et dans lequel la matière première est soumise à une ou plusieurs étapes de broyage avant l'étape (i).

2. Procédé selon la revendication 1, **caractérisé en ce que** les une ou plusieurs fractions de résidus contenant une polyoléfine de couleurs séparées sont amenées à un dispositif d'extrusion en vue de la fabrication de granulés de polyoléfines entre les étapes (iii) et (iv) ou après l'étape (iv), de préférence entre les étapes (iii) et (iv).

3. Procédé selon la revendication 1 ou 2, **caractérisé en ce que** la proportion de la fraction de résidus constituant la couleur principale de la fraction de résidus ne représente pas plus de 40 % du poids.

4. Procédé selon la revendication 3, **caractérisé en ce que** la fraction de résidus contenant une polyoléfine soumise au tri des paillettes dans l'étape (iii) est soumise à une séparation avec une unité (1) composée de trois trieurs de couleurs, la fraction de résidus contenant une polyoléfine étant amenée à un premier trieur de couleurs (2) dans lequel une composante de couleur souhaitée (6) est séparée d'une composante de couleur non traitée (7), la composante de couleur souhaitée obtenue dans le trieur de couleurs est amenée à un deuxième trieur de couleurs (3) dans lequel le produit issu du premier trieur de couleurs est à nouveau trié et la proportion de la composante de couleur souhaitée est encore augmentée, et la composante non souhaitée issue du premier trieur de couleurs est amenée à un troisième trieur de couleurs (4) dans lequel la proportion de la composante de couleur non souhaitée est encore augmentée, les fractions de couleur (9, 11) écartées dans le deuxième trieur de couleurs et le troisième étant ramenées comme matière première au premier trieur de couleurs.

5. Procédé selon la revendication 4, **caractérisé en ce que** le tri des paillettes dans l'étape (iii) fait intervenir plusieurs unités composées de trois trieurs de couleurs selon les indications de la revendication 4.

6. Procédé selon l'une des revendications 4 ou 5, **caractérisé en ce que** la fraction de résidus contenant une polyoléfine contient plus de trois couleurs et des paires de couleurs sont séparées respectivement de la fraction de résidus contenant une polyoléfine par des unités (1, le cas échéant 15) composées de trois trieurs de couleurs (2, 3, 4), et les paires de couleurs sont séparées en composantes de couleur correspondantes dans une unité d'aval (12) correspondante.

7. Procédé selon l'une des revendications précédentes, **caractérisé en ce que** la polyoléfine est un polyéthylène ou un polypropylène, de préférence un polyéthylène HD.

8. Procédé selon l'une des revendications précédentes, **caractérisé en ce que** le traitement de la fraction de résidus contenant une polyoléfine dans l'étape (ii) est effectué à une température d'au moins 70 °C, de préférence comprise entre 80 et 90 °C.

9. Procédé selon l'une des revendications précédentes, **caractérisé en ce que** le fluide alcalin de l'étape (ii) est de la lessive de soude aqueuse à une concentration inférieure à 10 % en poids, de préférence à une concentration comprise entre 0,5 et 5 % en poids et en particulier à une concentration comprise entre 1 et 3 % en poids.

10. Procédé selon l'une des revendications précédentes, **caractérisé en ce que**, au cours du tri des paillettes dans l'étape (iii), des particules qui ne se composent pas de polyoléfine et des particules dont la couleur diffère de la majorité des particules de la fraction de résidus contenant une polyoléfine sont séparées.

11. Procédé selon l'une des revendications précédentes, **caractérisé en ce qu'**un vide de ≤ 150 mbar, de préférence ≤ 50 mbar, en particulier ≤ 20 mbar et notamment compris entre 0,1 et 2 mbar est appliqué pour le traitement selon l'étape (iv).

12. Procédé selon l'une des revendications précédentes, **caractérisé en ce que** le traitement selon l'étape (iv) est effectué sous atmosphère de gaz inerte, de préférence sous atmosphère d'azote.

13. Procédé selon l'une des revendications précédentes, **caractérisé en ce que** le traitement selon l'étape (iv) est exécuté pendant une durée de 120 à 300 minutes et de préférence de 180 à 240 minutes.

14. Procédé selon l'une des revendications précédentes, **caractérisé en ce que** les résidus contenant de la polyoléfine sont prétriés par couleurs avant l'étape (i).

15. Procédé selon l'une des revendications précédentes, **caractérisé en ce que** la fraction de résidus contenant une polyoléfine issue de l'étape (ii) est ensuite triée et traitée dans un aéroséparateur.
